## Europäisches Patentamt

## European Patent Office

## Office européen des brevets

(11) Veröffentlichungsnummer: **0 214 700**
**A2**

# (12) EUROPÄISCHE PATENTANMELDUNG

(21) Anmeldenummer: 86201542.7

(22) Anmeldetag: 09.09.86

(51) Int. Cl.⁴: **G 02 B 6/26**
**G 02 B 6/44**

(30) Priorität: 11.09.85 DE 3532313

(43) Veröffentlichungstag der Anmeldung:
**18.03.87 Patentblatt 87/12**

(84) Benannte Vertragsstaaten:
**DE FR GB**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Becker, Johann**
**Zöllnerstrasse 64**
**D-5063 Overath(DE)**

(72) Erfinder: **Boehm, Detlef**
**Baumweg 16**
**D-5206 Neunkirchen-Seelscheid 1(DE)**

(74) Vertreter: **Koch, Ingo et al,**
**Philips Patentverwaltung GmbH Billstrasse 80 Postfach**
**105149**
**D-2000 Hamburg 28(DE)**

(54) Vorratsbehälter für einen Längenabschnitt eines Lichtwellenleiters.

(57) Die Erfindung betrifft einen Vorratsbehälter für einen Längenabschnitt eines Lichtwellenleiters, mit einem flachen Vorratsraum, dessen Höhe geringfügig größer als die Dicke des Lichtwellenleiters ist und aus welchem die Enden des Lichtwellenleiters durch Öffnungen der äußeren Randwandung in gewünschter Länge herausführbar sind. Damit darin größere Reservelängen einer einfaserigen optischen Leitung geordnet unterbringbar und jederzeit auf einfache Weise entnehmbar sind, ist vorgesehen, daß der Vorratsbehälter aus einem raumfesten, die äußeren Randwandungen tragenden Außenteil (10) und einem darin drehbaren Wickelteil (11, 24) besteht, daß der mittlere Bereich der Rangierleitung (1) S-förmig an Anlageflächen in der Wickelebene durch den Wickelteil (11, 24) geführt ist, daß die Enden des Lichtwellenleiters (Rangierleitung 1) durch eine Öffnung der äußeren Randwandung des Außenteils (10) mit freiem Spiel nach außen geführt und gemeinsam bei Drehung des Wickelteils (11, 24) um deren Umfangsfläche wickelbar bzw. davon abwickelbar sind.

Fig.1

Vorratsbehälter für einen Längenabschnitt eines Lichtwellenleiters

Die Erfindung bezieht sich auf einen Vorratsbehälter für
einen Längenabschnitt eines Lichtwellenleites, mit einem
flachen Vorratsraum, dessen Höhe geringfügig größer als
die Dicke des Lichtwellenleiters ist und aus welchem die
Enden des Lichtwellenleiters durch Öffnungen der äußeren
Randwandung in gewünschter Länge herausführbar sind.

Ein derartiger Vorratsbehälter ist durch die
DE-OS 31 18 173 bekannt. Darin ist jeweils eine Reservelänge der Endabschnitte der Lichtwellenleiter eines
optischen Kabels, welche zur Herstellung einer Spleißverbindung benötigt wurde, ablegbar.

Wenn bei Kabelverzweigungen die einzelnen Lichtwellenleiter verschiedener optischer Kabel auf verschiedenen und
unterschiedlich langen Wegen miteinander verbindbar sein
sollen, ist der Einsatz von sogenannten Rangierleitungen
zweckmäßig, welche jeweils aus einem begrenzten Stück
einer einfaserigen Leitung bestehen und zwischen die zu
verbindenden Enden der Lichtwellenleiter der optischen
Kabel geschaltet werden. Solche Rangierleitungen müssen
relativ lang sein, da auch erhebliche Entfernungen überbrückbar sein sollen. Nach Spleißvorgängen oder dem
Anbringen von Steckerelementen nicht mehr erforderliche
Überlängen müssen abgelegt werden. Bei späteren
Abwandlungen der Verbindungen muß wieder eine Reservelänge
verfügbar sein. Diesen Anforderungen genügt der bekannte
Aufnahmebehälter nicht.

Der Erfindung liegt die Aufgabe zugrunde, den Aufnahmebehälter der eingangs genannten Art so zu gestalten, daß

**0214700**

darin größere Reservelängen einer einfaserigen optischen Leitung geordnet unterbringbar und jederzeit auf einfache Weise entnehmbar sind.

Die Lösung gelingt dadurch, daß der Vorratsbehälter aus einem raumfesten, die äußeren Randwandungen tragenden Außenteil und einem darin drehbaren Wickelteil besteht, daß der mittlere Bereich der Rangierleistung S-förmig an Anlageflächen in der Wickelebene durch den Wickelteil geführt ist, daß die Enden des Lichtwellenleiters (Rangierleitung) durch eine Öffnung der äußeren Randwandung des Außenteils mit freiem Spiel nach außen geführt und gemeinsam bei Drehung des Wickelteils um dessen Umfangsfläche wickelbar bzw. davon abwickelbar sind.

Erfindungsgemäß sind die Enden der Rangierleitung gleichzeitig durch einen einzigen Aufwickelvorgang in den Aufnahmebehälter leichtgängig ein- und ausziehbar. Die Aufwicklung erfolgt in eindeutig vorgegebener Weise, so daß Verklemmungen oder Abknickungen der Rangierleitung innerhalb des Aufnahmebehälters ausgeschlossen sind.

Der Wickelteil weist vorteilhaft flache Erhebungen im Mittelbereich einer kreisförmigen Drehscheibe auf.

Eine günstige Ausführungsform ergibt sich dadurch, daß der Wickelteil eine zylinderscheibenförmige Mittelerhebung aufweist, durch welche zwischen etwa diagonal gegenüberliegenden Ausgangspunkten eine S-förmige Mitnehmerrinne zur Aufnahme des mittleren Bereichs der Rangierleitung verläuft.

Der minimal zulässige Biegeradius für Lichtwellenleiter wird nicht unterschritten, wenn die Krümmungsradien der an der Rangierleitung anliegenden Flächen der S-förmigen Mitnehmerrinnen größer als 20 mm sind.

Gemäß einer bevorzugten Ausführungsform besteht der Wickelteil aus zwei in diagonaler Richtung unter Bildung einer Abstandslücke benachbarten zylinderscheibenförmigen Erhebungen, deren Durchmesser größer als 40 mm sind. Die Rangierleitung ist dann durch die Abstandslücke zu führen.

Damit der Wickelteil von außen her gedreht werden kann, weist seine kreisförmige Drehscheibe eine Außenverzahnung auf, welche durch Lücken der Randwandung des Außenteils zugänglich ist.

Eine vorteilhafte Weiterbildung der Erfindung ist dadurch gekennzeichnet, daß mehrere Wickelteile in einem gemeinsamen Außenteil angeordnet sind und mit diesem eine Kassette bilden. Weiterhin kann vorteilhaft vorgesehen sein, daß mehrere Kassetten koaxial übereinander angeordnet und formschlüssig miteinander verbunden sind. Auf diese Weise sind eine Vielzahl von einzeln für sich handhabbaren Rangierleitungen raumsparend unterbringbar.

Wegen der geringen Bauhöhe der einzelnen übereinander liegenden Wickelteile können die einzelnen Drehscheiben vorteilhaft mit einem selektiv in Eingriff bringbaren Antriebselement verdreht werden.

Eine bevorzugte Ausführungsform ist dadurch gekennzeichnet, daß einer Kassette oder eine Gruppe von übereinandergeschichteten Kassetten ein Antriebselement zugeordnet ist, welches ein Ritzel aufweist, welches in verschiedenen Höhenlagen mit der Verzahnung einer der Drehscheiben in Eingriff bringbar und dessen Welle über eine Handkurbel antreibbar ist. Dabei kann vorgesehen sein, daß das Ritzel mit einem eine wesentlich größere Zähnezahl aufweisenden Primärzahnrad kämmt, welches über eine Handkurbel antreibbar ist.

0214700

Die Zwischenschaltung eines kleineren Zahnrades zwischen ein größeres Primärzahnrad und die Verzahnung der Drehscheibe ergibt ein günstiges Übersetzungsverhältnis, ohne daß eine zu große Lücke in der Randwandung des Gehäuses einer Kassette offen bleiben muß.

Eine vorteilhafte konstruktive Lösung besteht darin, daß das Ritzel außerhalb des Durchmesserbereichs der Drehscheiben auf einer zum Gehäuse einer Kassette oder einer Gruppe von Kassetten raumfesten Achse drehfest aber schwergängig längst verschiebbar angeordnet ist. Es ist aber auch möglich, daß das Ritzel Bestandteil einer Verdreheinrichtung ist, welche in verschiedenen Höhenlagen am Gehäuse einer Kassette oder einer Gruppe von Kassetten befestigbar ist. Im letzteren Fall müßte nicht jeder Gruppe von Vorratsbehältern ein eigener Antrieb fest zugeordnet werden, sondern dieser wäre als Servicegerät anlegbar.

Die Erfindung wird anhand der Beschreibung von in der Zeichnung dargestellten vorteilhaften Ausführungsbeispielen erläutert.

Figur 1 zeigt die Aufsicht auf einen Wickelteil für einen erfindungsgemäßen Vorratsbehälter

Figur 2 zeigt einen Querschnitt durch die Anordnung nach Figur 1

Figur 3 zeigt einen Querschnitt durch eine Kassette mit mehreren Vorratsbehältern

Figur 4 zeigt Phasen a, b und c der seitlichen Einfädelung einer Rangierleitung in einen Vorratsbehälter nach Figur 3

Figur 5 deutet eine abgewandelte Ausführung eines Wickelteils an

Figur 6 zeigt einen Querschnitt durch drei gestapelte Kassetten

Figur 7 zeigt ausschnittsweise die Aufsicht auf einen
Befestigungsabschnitt einer stapelbaren Kassette

Figur 8 zeigt eine Möglichkeit zur ratschenden Hemmung der
Drehbewegung eines Wickelteils

Figur 9 zeigt als Teilquerschnitt eine Gruppe von Vorratsbehältern mit einer fest zugeordneten
Antriebseinrichtung

Figur 10 zeigt die An icht auf eine lösbar und verschiebbar an eine Gruppe von Vorratsbehältern anlegbare
Antriebseinrichtung

Figur 11 zeigt eine Seitenansicht der Anordnung nach
Figur 10

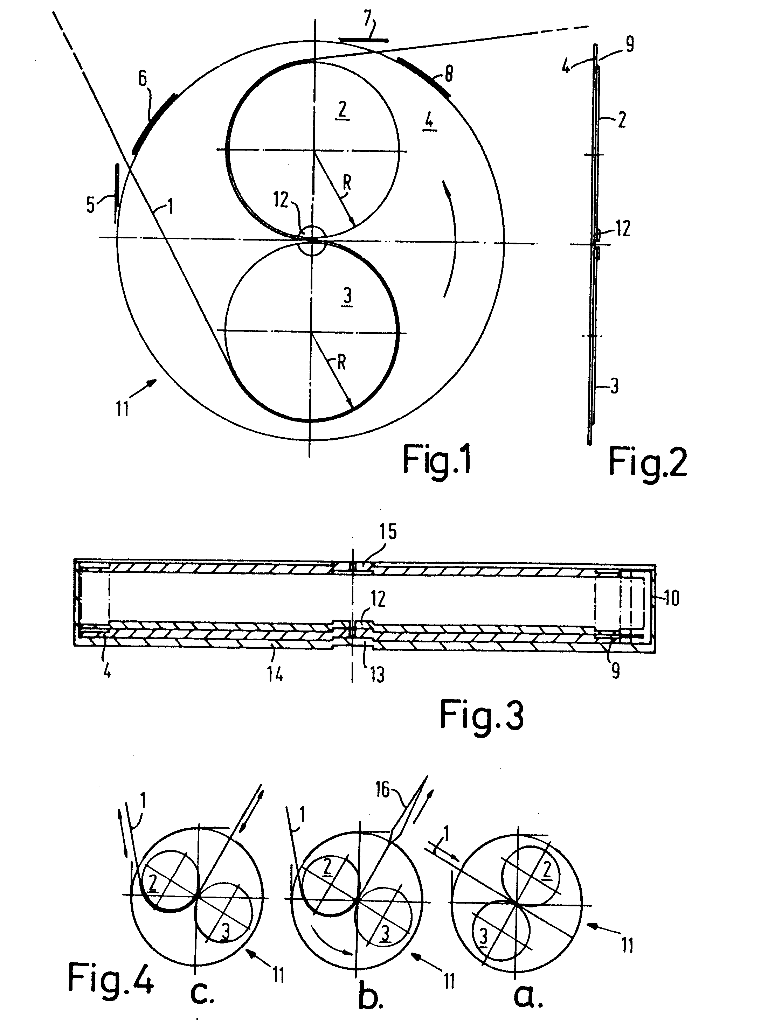

Der Vorratsbehälter gemäß der Figuren 1 und 2 für die Rangierleitung 1 weist einen Wickelkörper 11 auf, der aus
zwei flachen zylinderförmigen Erhebungsblöcken 2 und 3
besteht, die auf einer Drehscheibe 4 angeordnet sind und
z.B. einen Durchmesser von 2 R = 60 mm aufweisen. Von dem
raumfesten Außenteil, in welchem der Wickelteil 11 drehbar
gelagert ist, sind nur Abschnitte 5, 6 einerseits und 7, 8
andererseits der Randwandungen angedeutet, zwischen
welchen jeweils Umfangslücken für den Austritt der Enden
der Rangierleitung 1 gebildet sind. Um die
Erhebungsblöcke 2 und 3 wird zwischen der Drehscheibe 4
einerseits und einer nicht dargestellten Deckscheibe
andererseits eine Mehrzahl von Windungen der
Rangierleitung 1 gewickelt.

Bei einer Aufeinanderschichtung mehrerer Wickelteile
innerhalb eines gemeinsamen Kassettengehäuses 10 nach
Figur 3 welches eine für alle Wickelteile gemeinsame
Umfangswandung bildet, dient die Drehscheibe 4 eines aufliegenden nächsten Wickelteils als Deckscheibe.

Die einzelnen Wickelteile sind mittels zentraler, zur Hindurchführbarkeit der Rangierleitung 1 zweigeteilter

**0214700**

Lagernocken 12 gelagert, welche axial über die Erhebungskörper 2 und 3 vorstehen und in zugeordnete zentrale Ausnehmungen einer benachbarten Drehscheibe 4 eingreifen. Ein raumfester Lagernocken 13 ist an der Bodenplatte 14 des Kassettengehäuses 10 angebracht. Entsprechend ist eine raumfeste Ausnehmung zur Führung des Lagernockens 15 des letzten Wickelteils in einer nicht dargestellten Deckplatte vorzusehen.

Anhand der in Figur 4 dargestellten Verfahrensabschnitte wird erläutert, wie eine Rangierleitung 1 in den Aufnahmeraum 9 eines Wickelteils 11 einer Kassette 10 einfädelbar ist. Zunächst wird gemäß Phase a ein Ende der Rangierleitung 1 durch eine Umfangsöffnung des Kassettengehäuses 10 durch die Lücke zwischen zwei Erhebungskörpern 2 und 3 bis zur gegenüberliegenden Umfangswandung geschoben. Danach wird der Wickelkörper 11 bei gleichzeitigem Weiterschieben der Rangierleitung 1 in die in Phase b erkennbare Lage gedreht, bis das Ende der Rangierleitung vor der zweiten Umfangsöffnung des Kassettengehäuses 10 sichtbar wird. Dort kann es mit der Pinzette 16 gefaßt und gemäß Phase C ausgezogen werden, bis aus beiden Umfangsöffnungen des Kassettengehäuses 10 etwa eine gleich große Länge der Rangierleitung 1 herausragt. Danach können beide Enden durch Drehen des Wickelteils 11 eingezogen und um die Erhebungskörper 2 und 3 gewickelt werden.

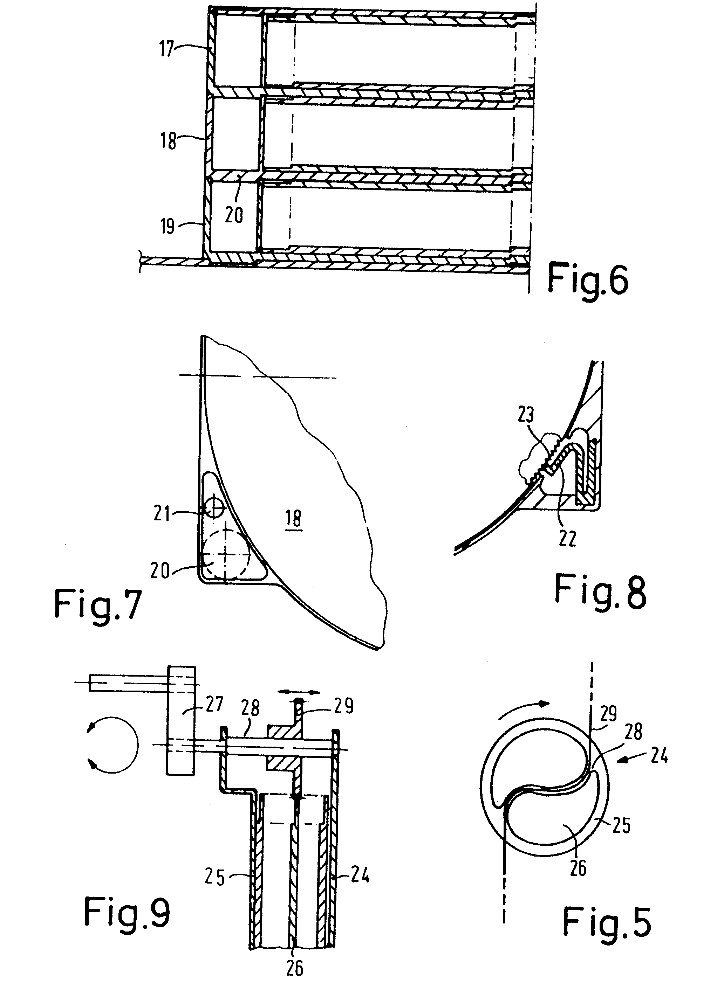

Figur 5 deutet eine alternative Gestaltung eines Wickelkörpers 24 an, auf dessen Drehscheibe 28 eine in der Grundform zylinderscheibenförmige Erhebung 26 angeordnet ist, durch welche eine S-förmige Rinne 28 zur Durchführung der Rangierleitung 29 führt. Die Radien der Anlageflächen der Rinne 28 für die Rangierleitung 29 sollten größer als 20 mm, vorzugsweise 30 mm betragen, damit der Mindestbiegeradius eines Lichtwellenleiters mit Sicherheit nicht unterschritten wird. Bei der Ausführung nach Figur 5 ist die mittlere Windungslänge einer Windung vorteilhaft größer als bei der nach Figur 1. Andererseits ergibt sich der Nachteil, daß eine Aufwicklung der Rangierleitung 29 nur in einer Drehrichtung des Wickelteils 24 erlaubt ist, weil sich in der Gegendrehrichtung zu kleine Biegeradien ergeben würden.

Gemäß Figur 6 können mehrere Kassetten der in Figur 3 dargestellten Art übereinandergestapelt werden. Sie weisen jeweils identische Kassettengehäuse 17, 18 und 19 auf, die mittels radial außen am Boden angeordneter Zentriernocken 20 in zugeordneter Ausnehmungen der Oberseiten einer darunterliegenden Kassette eingreifen. Eine Gruppe von Kassettengehäusen 17, 18 und 19 kann mittels durch die Bohrungen 21 (Figur 7) gesteckter Schrauben zusammengehalten werden.

Jedem einzelnen Wickelteil ist ein Ratschelement 22 nach Figur 8 zugeordnet, welches federnd in die Außenverzahnung 23 einer jeden Drehscheibe 4 eingreift, so daß eine Verdrehung nur bei Überschreitung eines Mindestdrehmoments möglich ist, welches größer ist, als die zwischen benachbarten Drehscheiben wirkenden Reibungsmomente. Dann kann bei der gewollten Drehung einer Drehscheibe kein Mitdrehen der benachbarten Drehscheiben verursacht werden.

In der Praxis muß jede einzelne Rangierleitung separat aus einer Kassette oder aus einer Gruppe von Kassetten ausziehbar sein. Wegen der geringen Abmessungen ist eine Handbetätigung schwierig. Deshalb sind Dreheinrichtungen empfehlenswert, welche einen wahlweisen selektiven Antrieb eines jeden Wickelteils ermöglichen.

Die in Figur 9 dargestellte Dreheinrichtung ist fest einer zwischen einer Unterplatte 24 und einer Oberplatte 25 befindlichen Gruppe von Wickelteilen 26 zuge-

**0214700**

ordnet. In Ansätzen der Unterplatte 24 und der Oberplatte 25 ist eine über die Handkurbel 27 drehbare Welle 28 gelagert, auf welcher das Ritzel 29 drehfest aber axial entgegen einer erhöhten Reibkraft verschiebbar mit jeder der Wickelteile 26 in Eingriff bringbar ist.

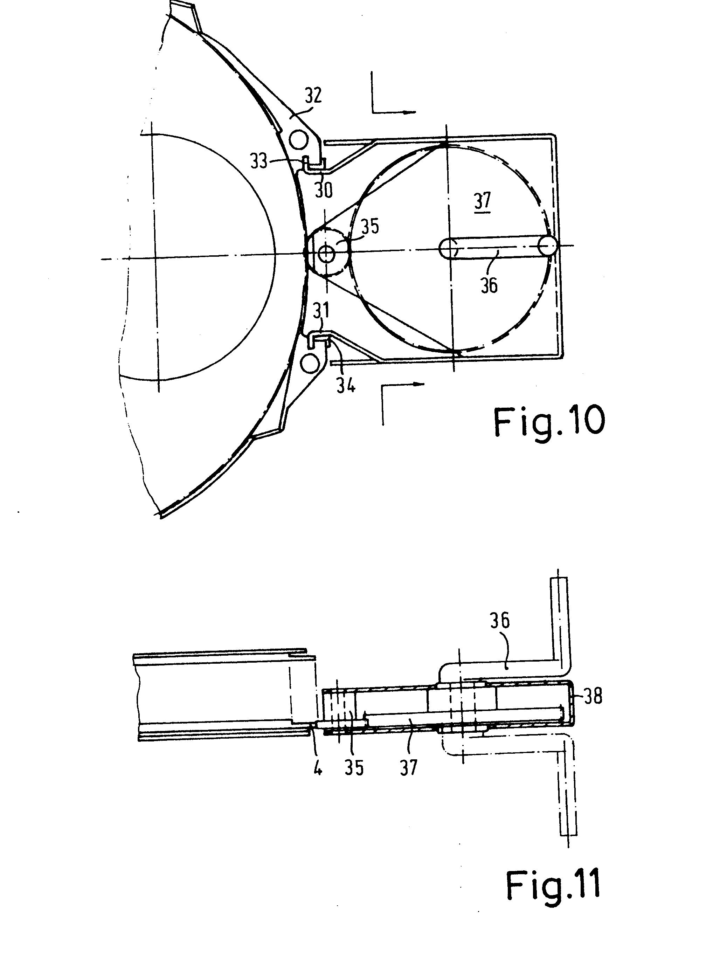

Die Dreheinrichtung nach den Figuren 10 und 11 ist als Serviceelement anbringbar. Dabei weist sie in Richtung zueinander auslenkbare Federhaken 30 und 31 auf, welche mit ihren abgewinkelten Enden 33 in zugeordnete Nuten eines Kassettengehäuses 32 fassen. Die richtige Höhenlage der Antriebseinrichtung wird durch Stege 34 an den Federhaken 30 und 31 eingestellt und gesichert, welche in jeder Höhenlage eines Wickelteils zugeordnete Nuten des Kassettengehäuses 32 einrastbar sind. Dabei kommt das Ritzel 35 in Eingriff mit der Verzahnung einer der Drehscheiben 4 und wird seinerseits über die Handkurbel 36 durch das größere Primärzahnrad 37 angetrieben, welches im Gehäuse 38 der Antriebseinrichtung drehbar gelagert ist. Für das kleine Ritzel 35 ist nur eine entsprechend kleine Ausnehmung durch die Umfangsfläche des Kassettengehäuses 32 erforderlich. Wegen des großen Übersetzungverhältnisses zwischen dem Primärzahnrad 37 und dem Ritzel 35 sind zum Einwickeln einer Rangierleitung dennoch wenig Drehungen erforderlich.

Die symmetrische Gestaltung der Befestigungselemente 30, 31 und 34 erlaubt eine um 180 ° geschwenkte Anbringung der Dreheinrichtung. Ebenso ist die Handkurbel an beiden Seiten des Primärzahnrades aufseztbar. Die Dreheinrichtung kann deshalb, je nach dem, ob oberhalb oder unterhalb der Kassette Platz ist, in der entsprechenden Zuordnung angebracht werden.

**0214700**

PATENTANSPRÜCHE

1. Vorratbehälter für einen Längenabschnitt eines Lichtwellenleites, mit einem flachen Vorratsraum, dessen Höhe geringfügig größer als die Dicke des Lichtwellenleiters ist und aus welchem die Enden des Lichtwellenleiters durch Öffnungen der äußeren Randwandung in gewünschter Länge herausführbar sind, dadurch gekennzeichnet, daß der Vorratsbehälter aus einem raumfesten, die äußeren Randwandungen tragenden Außenteil (10) und einem darin drehbaren Wickelteil (11, 24) besteht, daß der mittlere Bereich der Rangierleitung (1) S-förmig an Anlageflächen in der Wickelebene durch den Wickelteil (11, 24) geführt ist, daß die Enden des Lichtwellenleiters (Rangierleitung 1) durch eine Öffnung der äußeren Randwandung des Außenteils (10) mit freiem Spiel nach außen geführt und gemeinsam bei Drehung des Wickelteils (11, 24) um deren Umfangsfläche wickelbar bzw. davon abwickelbar sind.

2. Vorratsbehälter nach Anspruch 1, dadurch gekennzeichnet, daß der Wickelteil (11, 24) flache Erhebungen (2, 3, 26) im Mittelbereich einer kreisförmigen Drehscheibe (4, 25) aufweist.

3. Vorratsbehälter nach Anspruch 2, dadurch gekennzeichnet, daß der Wickelteil (24) eine zylinderscheibenförmige Mittelerhebung (26) aufweist, durch welche zwischen etwa diagonal gegenüberliegenden Ausgangspunkten eine S-förmige Mitnehmerrinne (28) zur Aufnahme des mittleren Bereichs der Rangierleitung (29) verläuft.

4.    Vorratsbehälter nach Anspruch 3,
dadurch gekennzeichnet, daß die Krümmungsradien R der an
der Rangierleitung (29) anliegenden Seiten der S-förmigen
Mitnehmerrinne (28) größer als 20 mm sind.


5.    Vorratsbehälter nach Anspruch 2,
dadurch gekennzeichnet, daß der Wickelteil (11) in
diagonaler Richtung durch Bildung einer Abstandslücke
benachbarte zylinderscheibenförmige Erhebungsblöcke (2, 3)
aufweist, deren Durchmesser (2 R) größer als 40 mm sind,
und daß die Rangierleitung (1) durch die Abstandslücke
geführt ist.


6.    Vorratsbehälter nach einem der Ansprüche 2 bis 5,
dadurch gekennzeichnet, daß die kreisförmige Drehscheibe (4, 25) eine Außenverzahnung (23) aufweist, welche
durch Lücken der Randwandung des Außenteils (10) zugänglich ist.


7.    Vorratsbehälter nach einem der Ansprüche 1 bis 6,
dadurch gekennzeichnet, daß zwischen Außenteil 10 und
Wickelteil (11, 24) eine bremsende Drehhemmung (22, 23)
wirksam ist.


8.    Vorratsbehälter nach einem der Ansprüche 1 bis 7,
dadurch gekennzeichnet, daß mehrere Wickelteile (11, 24)
in einem gemeinsamen Kassettengehäuse (10) angeordnet sind
und mit diesem eine Kassette bilden.


9.    Vorratsbehälter nach Anspruch 8,
dadurch gekennzeichnet, daß mehrere Kassetten (17, 18, 19)
koaxial übereinander angeordnet und formschlüssig
miteinander verbunden sind.

10. Vorratsbehälter nach Anspruch 8 oder 9, dadurch gekennzeichnet, daß einer Kassette oder einer Gruppe von übereinandergeschichteten Kassetten (17, 18, 19) eine Dreheinrichtung zugeordnet ist, welche ein Ritzel (29, 35) aufweist, welches in verschiedenen Höhenlagen mit der Verzahnung (23) einer der Drehscheiben (4, 25) in Eingriff bringbar und dessen Welle (28) über eine Handkurbel (27, 36) antreibbar ist.

11. Vorratsbehälter nach Anspruch 10, dadurch gekennzeichnet, daß das Ritzel (35) mit einem eine wesentlich größere Zähnezahl aufweisenden Primärzahnrad (37) kämmt, welches durch eine Handkurbel (36) antreibbar ist.

12. Vorratsbehälter nach Anspruch 10 oder 11, dadurch gekennzeichnet, daß das Ritzel (29, 35) außerhalb des Durchmesserbereichs der Drehscheiben (4, 25) auf einer zum Gehäuse der Kassette (10) oder einer Gruppe von Kassetten raumfesten Welle (28) drehfest aber schwergängig längsverschiebbar angeordnet ist.

13. Vorratsbehälter nach Anspruch 10 oder 11, dadurch gekennzeichnet, daß das Ritzel (35) Bestandteil einer Dreheinrichtung ist, welche in verschiedenen Höhenlagen am Gehäuse einer Kassette (32) oder einer Gruppe von Kassetten befestigbar ist.

14. Vorratsbehälter nach Anspruch 13, dadurch gekennzeichnetn, daß die Dreheinrichtung in um 180 ° geschwenkter Achslage am Gehäuse (32) befestigbar ist.

15. Vorratsbehälter nach einem der Ansprüche 10 bis 14, dadurch gekennzeichnet, daß die Handkurbel (27, 36) wahlweise auf eines der Enden der Welle des Ritzels (29 bzw. des Primärzahnrades 36) drehmomentschlüssig aber lösbar aufbringbar ist.

0214700

Fig.1

Fig.2

Fig.3

Fig.4    c.        b.        a.

1·Ⅲ·PHD 85–130

0214700

Fig.6

Fig.7

Fig.8

Fig.9

Fig.5

0214700

Fig.10

Fig.11

3-Ⅲ-PHD 85-130